# EUROPEAN PATENT SPECIFICATION

(11) **EP 3 597 538 B1**
(45) Date of publication and mention of the grant of the patent: **26.04.2023**
(21) Application number: 18184114.9
(22) Date of filing: 18.07.2018
(51) Int. Cl.: B64C 27/08, B64C 27/20, B64C 39/00

(54) **GROUND VEHICLE FOR TRANSPORTING A VTOL AIRCRAFT**
BODENFAHRZEUG ZUM TRANSPORT EINES SENKRECHTSTART- UND -LANDEFLUGZEUGS
VÉHICULE TERRESTRE POUR LE TRANSPORT D'UN AÉRONEF ADAV

(43) Date of publication of application: 22.01.2020
(73) Proprietor: W.I.S. Entwicklungsgesellschaft mbH & Co. KG, 50999 Köln (DE)
(72) Inventor: Fähnrich, Ilja, 14656 Brieselang (DE); Gluba, Dr. Marc, 14552 Michendorf (DE)
(74) Representative: Vossius & Partner Patentanwälte Rechtsanwälte mbB

(56) References cited:
- WO-A1-2016/164416
- WO-A1-2017/072771
- WO-A1-2017/185378
- WO-A2-2017/198696
- US-A1- 2018 005 534
- US-A1- 2018 072 212
- US-B1- 9 089 969
- US-B2- 9 464 902

## Description

The present invention relates to a ground vehicle for transporting a vertical take-off and landing aircraft and/or its payload. The present invention further relates to a system comprising such a ground vehicle and a vertical take-off and landing aircraft as well as to a method for transporting a vertical take-off and landing aircraft and/or its payload.

Vertical take-off and landing (VTOL) aircrafts such as drones and unmanned aerial vehicles are utilized for various applications such as transporting payloads and/or persons, data acquisition (such as orthophotography, photogrammetry, pollutant analysis, meteorological data acquisition and monitoring) and the distribution of seeds in agriculture to name but a few. In most cases, the VTOL aircraft can perform its task automatically. In other words, a preprogrammed VTOL aircraft may start autonomously, fly along a predetermined path, perform certain actions such as taking aerial photographs and subsequently touch down again. For this purpose VTOL aircrafts are typically adapted to determine their own position and orientation utilizing, e.g., GPS and compass data or real-time kinematic (RTK) systems. To facilitate a stable and controlled flight the VTOL aircraft needs to know its position and orientation with both high accuracy and high acquisition rate. While the accuracy of GPS goes down to a couple of meters, RTK receivers allow to determine the position of a VTOL aircraft with a precision of a few centimeters. However, the acquisition rate is in the order of a few 10 Hz only. Hence, during flight GPS and/or RTK is typically supplemented by acceleration sensors and/or gyrometers in order to improve the stability of the flight and to increase the precision of the flight path followed by the VTOL aircraft.

Nevertheless, the absolute position of the VTOL aircraft during landing is limited by the position and data acquisition rate of, e.g., the GPS receiver. In particular, in case of gusty winds it is almost impossible for a VTOL aircraft navigated by GPS to touch down at a precise position with a precise orientation as it would be required for automated landing in a dedicated hangar or recharging appliance. Consequently, human interaction is still required when utilizing VTOL aircrafts because personnel has to, in particular, localize the landed VTOL aircraft after its mission and carry it to a charging station or base. This is a substantial disadvantage when it comes to continuous usage of many VTOL aircrafts, e.g., in logistics. Moreover, any human interaction increases the costs of a semi-automatic process considerably.

WO 2017/072771 A1, according to its abstract, discloses an automatic method for autonomous interactions between robots, comprising an action of automatically receiving, by a transport robot, a request for transporting a service robot. The method comprises an action of automatically computing a location of the service robot. The method comprises an action of automatically moving the transport robot to the location of the service robot.

WO 2017/198696 A2, according to its abstract, discloses an intelligent autonomous unmanned system having unmanned aerial vehicles and unmanned ground vehicles capable of moving or, unmanned ground vehicles capable of moving and a software platform for control and monitoring. A moving ground station provides a location for interfacing between the unmanned aerial vehicles or packages carried by the vehicles. In certain embodiments, the unmanned aerial vehicles autonomously navigate from one moving unmanned ground vehicle to another.

WO 2016/164416 A1, according to its abstract, discloses a ground movement plug-in (GMP) apparatus for providing ground propulsion to an unmanned aircraft vehicle (UAV). In an embodiment, the GMP apparatus includes a frame configured to mechanically couple with the UAV, a plurality of wheels, at least one of which is actuatable by a motor, and a controller operably coupled to the motor to control propulsion of the GMP apparatus.

US 2018/005534 A1, according to its abstract, discloses a system for autonomous navigation of an unmanned aerial vehicle.

US 9 464 902 B2, according to its abstract, discloses a system including an unmanned aerial vehicle and an unmanned surface vehicle. The unmanned aerial vehicle has a memory storing a plurality of collection points and at least one sensor for collecting sensor data from each of the collection points. The unmanned surface vehicle is capable of moving to a plurality of locations. The unmanned aerial vehicle travels through the air between at least two collection points stored in the memory and the unmanned aerial vehicle is carried between at least two collection points stored in the memory by the unmanned surface vehicle.

WO 2017/185378 A1, according to its abstract, discloses methods and systems for transporting an unmanned aerial vehicle (UAV) and data acquisition. The method may comprise determining whether the UAV is in a ground mode or a flight mode. The UAV may be in the ground mode when the weight of the UAV is borne by an unmanned carrier which is configured to carry the UAV. The UAV may be in the flight mode when the UAV is released from the unmanned carrier.

US 9 089 969 B 1, according to its abstract, discloses devices, systems and methods for loading articles on one or more support surfaces. One of the methods includes autonomously modeling at least some of the articles in a stable article arrangement on a first of the support surfaces using a controller. The articles in the modeled article arrangement are autonomously gathered using one or more manipulators.

US 2018/072212 A1, according to its abstract, discloses an automated guided vehicle (AGV) that is configured to operate with a navigation and guidance system including a base frame structure that supports a material handling apparatus.

It is one object of the present invention to alleviate the above-mentioned disadvantage. This object is, inter alia, achieved by the features of the independent claims. The dependent claims relate to preferred features of the present invention.

Accordingly, the present invention relates to a system comprising a vertical take-off and landing aircraft and a ground vehicle, according to independent claim 1.

Accordingly, the present invention is, inter alia, based on the idea to subdivide for instance the return flight (after the mission) of the VTOL aircraft to a specific base position into a flight to and a touchdown at a somewhat arbitrary position on the one hand and into an automatic transport of the landed VTOL aircraft to the precise base position by means of an autonomous ground vehicle on the other hand. At first sight, this might look like an overly complicated and expensive solution since an additional device, namely the ground vehicle, has to be provided. However, it has surprisingly turned out that it is technically much more feasible and less costly to provide for the additional ground vehicle which can easily achieve sufficient precision when it comes to transporting the landed aircraft and/or its payload to a predetermined position rather than trying to further improve the precision of the touchdown itself of the VTOL aircraft. Moreover, for the take-off procedure the transport by means of a ground vehicle facilitates automatic VTOL take-off, where otherwise a direct start from the specific base position is impossible (e.g. within a hangar).

A "ground vehicle" in the context of the present invention may be any device adapted for moving over ground (rather than flying) and for transporting a VTOL aircraft and/or its payload, such as a wheeler, a track vehicle, a robot or the like.

A "VTOL aircraft" in the context of the present invention may be any aircraft that can hover, take-off, and land substantially vertically. Particularly preferred VTOL aircrafts are drones and multirotors or multicopters (such as tricopters, quadcopters, hexacopters and the like).

In the context of the present invention, an autonomously maneuvering vehicle is adapted to maneuver on its own, i.e. without a driver and without being controlled by remote control. Similarly, the ground vehicle is preferably adapted to autonomously move towards the landed aircraft, i.e. to move towards the landed aircraft without any driver and without being remote controlled. The same holds preferably true for picking up the landed aircraft and/or its payload and for transporting the picked-up aircraft and/or payload to a predetermined position.

The predetermined position may be a position identified by predetermined coordinates and/or may be a position identifiable by the ground vehicle due to certain markers or landmarks or the like.

Clearly, the ground vehicle according to the present invention provides a number of advantages. For example, human interaction is no longer required which reduces the costs and allows for a more versatile usage of VTOL aircraft. Moreover, a system comprising such a ground vehicle and a VTOL aircraft is more robust and helps in avoiding errors of users. In particular, such a system may be easily used at any time and/or at any place and allows for having a large number of VTOL aircrafts ready for missions, which can be initiated and/or programmed from far away.

Preferably, the ground vehicle comprises a positioning system to determine its own position. For example, the ground vehicle may comprise a GPS and/or an RTK receiver. Alternatively or in addition an external system may be provided for determining the position of the ground vehicle and transmitting said determined position to the ground vehicle. For example, a system comprising one or more cameras may be utilized to track the position of the ground vehicle. The ground vehicle preferably comprises an orientation system to determine its own orientation. The orientation system may be the same as the positioning system or may be an additional system providing for (a more precise) orientation of the ground vehicle. If a system of one or more cameras is used for determining the orientation of the ground vehicle, the ground vehicle may have one or more markers which may help during image analysis.

Preferably, the ground vehicle is adapted to communicate with an external unit and to locate the landed aircraft with respect to its own position on the basis of the aircraft's coordinates received by communication with the external unit. Similarly, the ground vehicle may be adapted to communicate with an external unit and to identify the landed aircraft's orientation with respect to its own orientation on the basis of the aircraft's orientation received by communication with the external unit. Needless to say that the external unit in this case should be able to determine the aircraft's coordinates and/or orientation by means of respective sensors and software and/or to receive the aircraft's coordinates and/or orientation via direct or indirect communication with the aircraft. The external unit could also be identical with the aircraft. In other words, the ground vehicle may also be adapted to communicate with the aircraft and to locate the landed aircraft and to identify the landed aircraft's orientation on the basis of the aircraft's coordinates and orientation received by communication with the aircraft. For the purpose of communication with an external unit and/or the aircraft the ground vehicle, the external unit and/or the aircraft may utilize any known communication standard such as WLAN, Bluetooth, ZigBee, LTE, or the like. Utilizing the public LTE network allows for communication over large distances which increases versatility of the system. Communication might be encoded using, e.g., cryptographically secured virtual private networks (VPN). In addition or alternatively proprietary transmission paths may be used for communication.

Preferably, the ground vehicle comprises a detection system to determine the landed aircraft's position and/or orientation. Preferably, the detection system comprises one or a combination of the following components: one or more cameras, a laser, a LIDAR, one or more LEDs, one or more light sensors, one or more segmented light sensors, one or more magnetic sensors. The detection system is preferably used in conjunction with known coordinates of the landed aircraft determined as discussed above. For example, the ground vehicle may receive the GPS coordinates of the landed aircraft via direct or indirect communication and move in close proximity to the landed aircraft (in case of GPS: up to a distance of a couple of meters). Then, the ground vehicle uses its own detection system to more precisely determine the landed aircraft's position and/or orientation. For example, a stereo camera system allows for analyzing the distance between the landed aircraft and the cameras. In another design, the aircraft may have a collimated light beam emerging from a laser or an LED directed into a known orientation with respect to the aircraft's reference frame. The ground vehicle may then start its search in close proximity of the aircraft until the beam hits, e.g., a segmented light sensor at the ground vehicle. On the basis of the segment hit by the beam, the ground vehicle may decide to turn in either direction or move towards the beam source. Another possible design of the ground vehicle would use a laser scanner, so called LIDAR, to examine the landing area. Once it recognizes a significant drop in distance into a certain direction the touchdown coordinates can be determined directly. The approximate orientation of a landed aircraft can be deduced from the distance of and between the landing skid. Once the ground vehicle approaches the VTOL aircraft the stopping position is sensed by either a dedicated light barrier (e.g. between the landing skid of the aircraft), a mechanical contact, or a magnetic Hall-contact. Additional pairs of light emitters and segmented detectors below the VTOL aircraft and on top of the ground vehicle, respectively, allow for improving the position and orientation of the ground vehicle with respect to the aircraft before pick-up.

Preferably, the ground vehicle is adapted to approach the landed aircraft from one of one or more predetermined sides and/or with one of one or more predetermined orientations with respect to the aircraft's orientation. For example, in case the landed aircraft rests on one or more feet, the ground vehicle may be adapted to approach the landed aircraft so as not to interfere with the one or more feet of the aircraft. Similarly, other structures of the landed aircraft such as the rotors might have to be avoided when approaching the landed aircraft. Preferably, the ground vehicle is adapted to pick the landed aircraft and/or its payload up so as to achieve one or more predetermined orientations of the picked-up aircraft and/or payload with respect to the ground vehicle. This may be helpful in case the pick-up mechanism only allows for pick up in certain orientations (for example by mating respective structures in the ground vehicle and the aircraft). Moreover, it may be advantageous that the picked up aircraft and/or payload is arranged on the ground vehicle during transport with this specific orientation in order to ensure that the aircraft and/or payload once being dropped off at the base or charging station is dropped off with the correct orientation. For example, the landed aircraft may emit a light beam along a certain direction which has a predetermined relationship to a specific axis of the aircraft. The ground vehicle having appropriate sensors may then move along the light beam to approach the landed aircraft simultaneously from a predetermined side and with a predetermined orientation as described above. In another design where the aircraft itself supplies position and/or orientation data with an accuracy of a few centimeters and/or a few degrees the aircraft can also be picked up using oversized fork-like supports that tolerate this deviation simply by mechanical design and force the lifted aircraft into the predetermined orientation by gravity. In this case, no additional fine-tuning of position and/or orientation is required.

The ground vehicle comprises a support for supporting the aircraft and/or its payload. The support may comprise one or a combination of the following structural elements: planar support platform, curved support platform, one or more support posts, one or more support bars, a wire mesh or netting, a support grid. The support is movable in at least a vertical direction in order to lift the landed aircraft from the ground and/or the payload from the aircraft. For this purpose, the ground vehicle may comprise a motor adapted to vertically move the support upwards and downwards. Alternatively or in addition the entire ground vehicle may be adapted to move upwards and downwards with respect to ground. It is further preferable that the ground vehicle is adapted to at least partly move under the landed aircraft and/or its payload and to pick the landed aircraft and/or the payload up by moving the support and/or the entire ground vehicle upwards.

As mentioned above, the ground vehicle preferably comprises a positioning system to determine its own position. Moreover, the ground vehicle is preferably adapted to communicate with an external unit and to locate the predetermined position to which the picked-up aircraft and/or payload is to be transported with respect to its own position on the basis of the coordinates of the predetermined position received by communication with the external unit. Alternatively, the ground vehicle may be preprogrammed to move to the coordinates of the predetermined position. Alternatively or in addition the ground vehicle may comprise a detection system to determine the predetermined position and/or a predetermined orientation. The detection system may comprise one or more of the components mentioned above, namely: one or more cameras, a laser, a LIDAR, one or more LEDs, one or more light sensors, one or more segmented light sensors, one or more magnetic sensors.

The ground vehicle is preferably adapted to approach the predetermined position from one of one or more predetermined sides and/or with one of one or more predetermined orientations. This may, e.g., be advantageous if the ground vehicle transports the VTOL aircraft to a charging system which requires a specific docking.

The ground vehicle preferably comprises a battery and charging equipment, wherein the charging equipment preferably comprises one or a combination of: one or more electrical contacts for contacting a charging device, one or more charging coils. If the charging equipment comprises one or more electrical contacts for contacting a charging device located at the base station, it is necessary to precisely position the ground vehicle relative to those contacts of the charging device. As mentioned above, in this case it may be advantageous that the ground vehicle comprises a sufficiently precise detection system to determine the predetermined position and/or a predetermined orientation. In a similar manner as discussed above with respect to the landed aircraft it may be preferable that the base station or a charging device comprises respective markers (e.g., QR code) which may be detected by a camera or other optical sensor in order to precisely position the ground vehicle and, consequently, the transported VTOL aircraft to the contacts of the charging device. If one or more charging coils are being used for charging the ground vehicle's battery, a less precise positioning is required. Moreover, the charging coils may also be utilized for optimizing the relative position of the ground vehicle with respect to the charging device.

The ground vehicle preferably comprises one or a combination of: one or more crawlers, one or more mecanum wheels. Preferably, the ground vehicle can autonomously move within two dimensions over ground. It is further preferred that the ground vehicle is adapted to rotate around a vertical axis.

Any of the preferred features of the ground vehicle described above represent also preferred features for the system.

The aircraft is adapted to transport a payload as is known in the art. The aircraft may be any autonomous VTOL aircraft and, in particular, a drone, multirotor or multicopter as known in the art. The VTOL aircraft may comprise a processor for controlling certain missions and a programming unit allowing to program and control missions. The VTOL aircraft may further comprise a system for determining its position such as GPS, RTK and/or an in-door positioning system (e.g. ultra-wideband time-of-flight IPS). Alternatively or in addition the VTOL aircraft may have a camera system or other optical sensors and may be adapted to indentify certain objects and/or markers in the surrounding for determining its own position.

The VTOL aircraft may be adapted to fly along a predetermined path defined by, e.g., GPS coordinates. The VTOL aircraft may comprise a processor for controlling said flight path and/or for stabilizing the aircraft during its missions. The processor may also be utilized for analyzing sensor data and/or images taken during the mission.

The VTOL aircraft may comprise a bidirectional communication channel and electrical contacts for automatic charging of a battery.

The aircraft may be adapted to transport a payload such as equipment (e.g., one or more cameras and/or one or more sensors) or a parcel. If the VTOL aircraft is used to transport parcels the aircraft is preferably adapted to automatically receive such parcel and to dispense the parcel after transport.

The ground vehicle and the aircraft are adapted to communicate, directly or indirectly, with each other.

The ground vehicle comprises preferably a lift device adapted to engage with the aircraft and to lift the aircraft and/or its payload from ground. The aircraft and/or the payload preferably comprises one or more mating sections for engaging with the lift device.

The ground vehicle preferably comprises a detection system to determining the landed aircraft's position and/or orientation and the aircraft preferably comprises one or more detection guides for enabling and/or improving the landed aircraft's position and/or orientation determined by the ground vehicle's detection system. The detection system preferably comprises, as discussed above, one or a combination of the following components: one or more cameras, a laser, a LIDAR, one or more LEDs, one or more light sensors, one or more segmented light sensors, one or more magnetic sensors. The detection guide preferably comprises one or a combination of the following components: one or more markers (e.g., QR codes), several markers of different shape, size and/or color, one or more light reflecting surfaces, one or more LEDs, one or more light sources, one or more magnets.

The system preferably comprises a base station, wherein the base station is preferably adapted to communicate with the ground vehicle and/or the aircraft.

The system preferably comprises an indoor positioning system for determining the position and/or orientation of the ground vehicle and/or the aircraft.

The system preferably comprises a charging station. The ground vehicle and/or the aircraft preferably comprises a battery and charging equipment, wherein the charging station is preferably adapted to cooperate with the charging equipment for charging the battery. The charging equipment preferably comprises one or a combination of: one or more electrical contacts for contacting a charging device, one or more charging coils.

The present invention further relates to a method for transporting a VTOL aircraft and/or its payload, according to independent claim 11.

According to the method the VTOL aircraft, preferably autonomously, maneuvers through 3D space and, preferably autonomously, touches down. After touchdown, the landed aircraft is located and a ground vehicle moves autonomously towards the landed aircraft. The ground vehicle then picks up the landed aircraft and/or its payload and transports the picked-up aircraft and/or the payload to a predetermined position. Moreover, the same holds true for the take-off procedure, wherein the VTOL aircraft is picked up from the charging appliance, transported to the take-off position, and dropped off or even starts directly from the ground vehicle.

Preferably, the ground vehicle is a ground vehicle with any of the preferred features described above. Preferably, the method utilizes a system as described above.

The landed aircraft is preferably located by a positioning system of the aircraft, by the ground vehicle and/or by an external positioning system.

The step of locating the landed aircraft preferably yields the position and/or orientation of the landed aircraft with an accuracy of less than 50 cm and/ or 10°, preferably less than 20 cm and/or 5°, more preferably less than 10 cm and/or 3°.

The step of moving the ground vehicle towards the landed aircraft preferably comprises moving the ground vehicle to a certain area around the located aircraft. For example, the ground vehicle may move to a position having a distance of about 2 m for the aircraft. Subsequently, the ground vehicle preferably locates the position and/orientation of the landed aircraft with an accuracy of less than 2 cm and/or 2°, preferably less than 1 cm and/or 1°, more preferably less than 5 mm and/or 0.5°.

Preferably, the ground vehicle approaches the landed aircraft from one of more predetermined sides and/or with one of one or more predetermined orientations with respect to the aircraft's orientation. The ground vehicle preferably picks the landed aircraft and/or its payload up so as to achieve one of one or more predetermined orientations of the picked up aircraft and/or payload with respect to the ground vehicle.

The predetermined position preferably corresponds to a charging station.

The ground vehicle preferably moves towards a charging station once the vehicle has been transported to the predetermined position.

According to the method, the aircraft may start again from the predetermined position and/or from the charging station.

The method may further comprise the steps of transporting the aircraft from the predetermined position to a start position, preferably utilizing the ground vehicle, and letting the aircraft start again from the start position.

Preferred embodiments of the present invention are described with reference to the following Figures which show:
- Figure 1A: a front-top-left isometric view of a preferred embodiment of a ground vehicle carrying an aircraft;
- Figure 1B: a back-top-left isometric view of the ground vehicle according to Figure 1A;
- Figure 2A: a side view of the ground vehicle according to Figure 1;
- Figure 2B: a front view of the ground vehicle according to Figure 1;
- Figure 2C: a bottom view of the ground vehicle according to Figure 1;
- Figure 3A: a side view of the ground vehicle according to Figure 1 without the aircraft;
- Figure 3B: a back view from the ground vehicle according to Figure 3A;
- Figure 3C: an isometric view of the ground vehicle according to Figure 3A;
- Figure 3D: a bottom view of the ground vehicle according to Figure 3A;
- Figure 4A: a front view of the aircraft according to Figure 1 without the ground vehicle,
- Figure 4B: an isometric view of the aircraft according to Figure 4A;
- Figure 5A: a front view of a preferred embodiment of a charging station;
- Figure 5B: an isometric view of the charging station according to Figure 5A;
- Figure 6A: an isometric view of a preferred embodiment of a payload adaptor;
- Figure 6B: an isometric view of a preferred embodiment of a payload container;
- Figure 6C: an isometric view of a preferred embodiment of a lifting appliance; and
- Figure 6D: an isometric view of the payload adaptor of Figure 6A, the payload container of Figure 6B and the lifting appliance of Figure 6C.

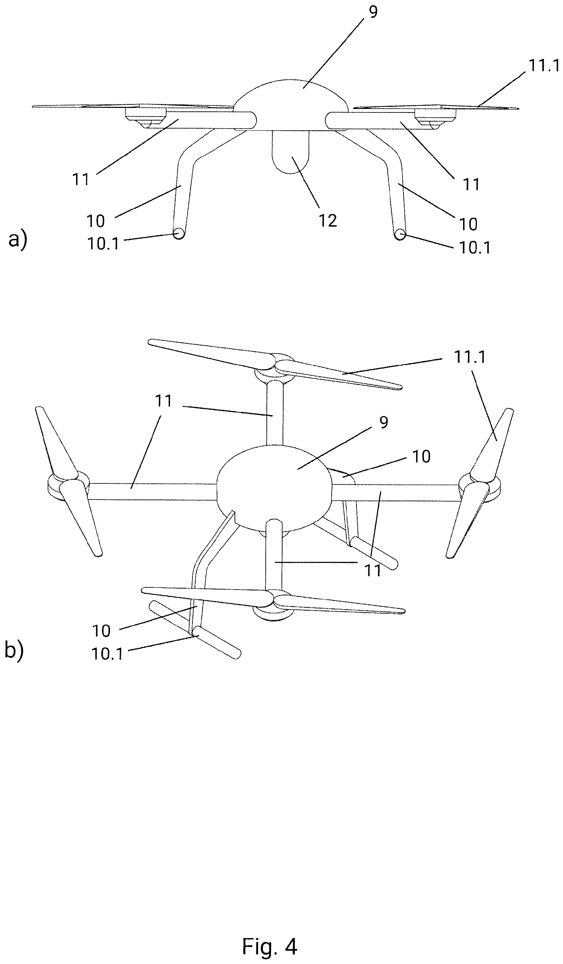

Figures 4A and 4B show a front view and an isometric view of a preferred embodiment of a VTOL aircraft which may be used in conjunction with the inventive system and/or the inventive method. In the embodiment shown the aircraft is a quadcopter. However, the present invention is not limited to any specific aircraft and all features and advantages discussed subsequently may be combined with or realized in other VTOL aircrafts, in particular drones, multirotors and multicopters as well.

In the embodiments shown in Figure 4, the aircraft comprises four cantilevers 11 with four rotors 11.1 attached thereto. The four cantilevers 11 extend from an aircraft body 9 which is adapted to mount and carry a payload 12. The aircraft further comprises two legs 10 extending downward from the aircraft body 9 and having respective horizontal bars or runners 10.1 attached to their distal ends. The two legs 10 and the two bars 10.1 are adapted to support the aircraft once landed. While the aircraft shown in Figure 4 comprises two legs with two respective bars, three or more legs may be provided. If three or more legs are provided, the horizontal bars 10.1 are not necessarily required as the aircraft may also be stably supported on the distal ends of three or more legs 10.

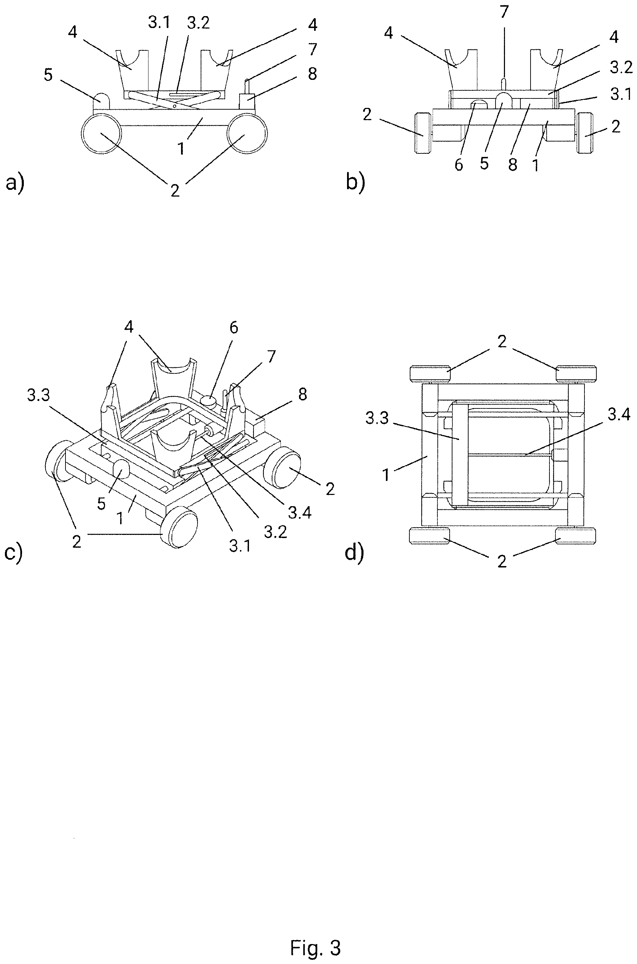

Figures 3A to 3D show a side view, a back view, an isometric view and a bottom view of a preferred embodiment of a ground vehicle according to the present invention. The ground vehicle comprises a frame 1, four wheels 2, a lifting appliance 3, four supports 4, a sensor 5, a positioning system 6, a communication system 7 and a processor 8.

While the frame 1 is shown to have a rectangular shape, the present invention is not limited to such shape and the frame may have any shape and may be made of any material providing sufficient support for carrying the weight of the components of the ground vehicle, the VTOL aircraft to be transported and its payload.

The four wheels 2 are preferably driven by four motors independently from each other. By controlling the direction and speed of rotation of each wheel independently the ground vehicle may be maneuvered in any direction. This is particularly true if the four wheels 2 are so called mecanum wheels which even allow for a sideways motion of the ground vehicle. The processor 8 calculates the necessary parameters for each wheel on the basis of the path to be followed by the ground vehicle and, correspondingly, controls the respective motors. For this purpose, the processor 8 also uses the positional data acquired by the positioning system 6 which may comprise one or a combination of the following components: GPS, RTK, IPS, compass.

The sensor 5 may, e.g., be a camera for taking pictures of the surrounding of the ground vehicle, which pictures may be analyzed by the processor 8 in order to indentify the position and/or orientation of the landed aircraft. While only one camera 5 is schematically shown in Figure 3, two or more cameras may be utilized to generate, e.g., a stereoscopic image which also allows for calculating the distance between the aircraft and the ground vehicle. In addition or alternatively other sensor components may also be utilized as discussed above.

The ground vehicle further comprises a communication system 7 which preferably allows for bidirectional communication with an external unit such as a charging station or the aircraft. As discussed above, any known protocol may be used for communication.

As mentioned above, the ground vehicle further comprises four supports 4 for supporting the aircraft which are movable in a vertical direction in order to lift the landed aircraft from the ground. In the shown embodiment, the vertical movement is achieved by means of a lifting appliance 3 comprising a scissors mechanism 3.1, a lifting frame 3.2, a linear guide 3.3, and a spindle 3.4 for driving the linear guide 3.3, which spindle 3.4 is driven by a motor (not shown). Rotating the spindle by the motor moves the linear guide back and forth which, due to the scissor mechanism, results in an upwards and downwards movement of the lifting frame 3.2 and the four supports 4 mounted to the lifting frame 3.2. Of course, the present invention is not limited to the specific lifting appliance shown in Figure 3 and might, instead, utilize other mechanisms for providing vertical movement of the four supports 4, such as a step motor or a hydraulic mechanism.

Moreover, the present invention is not limited to four supports 4 or the specific shape and arrangement of the supports 4 of the embodiments shown in Figure 3. In this specific embodiment, the four supports 4 provide for curved supporting surfaces or recesses corresponding to the four cantilevers 11 of the aircraft. Depending on the number, shape and size of the cantilevers of the aircraft more or less supports 4 having different corresponding shapes and sizes may be provided. Moreover, the aircraft need not be carried and supported at its cantilevers but may have additional engagement mechanisms or structures adapted for being engaged by respective supports of the ground vehicle. Rather than having several supports the ground vehicle could only have a single support platform adapted for supporting, e.g., the aircraft body 9. The aircraft could also have additional smaller legs adapted for mounting the aircraft on such support platform.

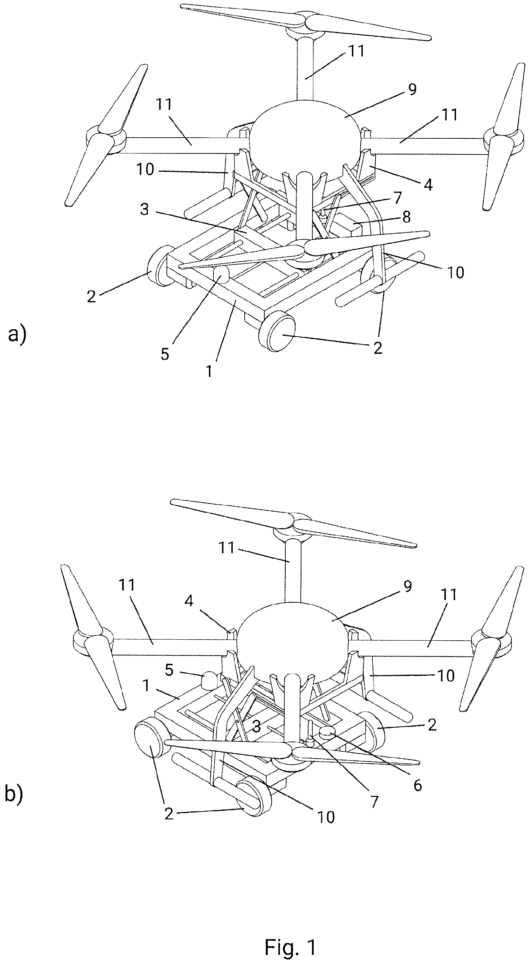

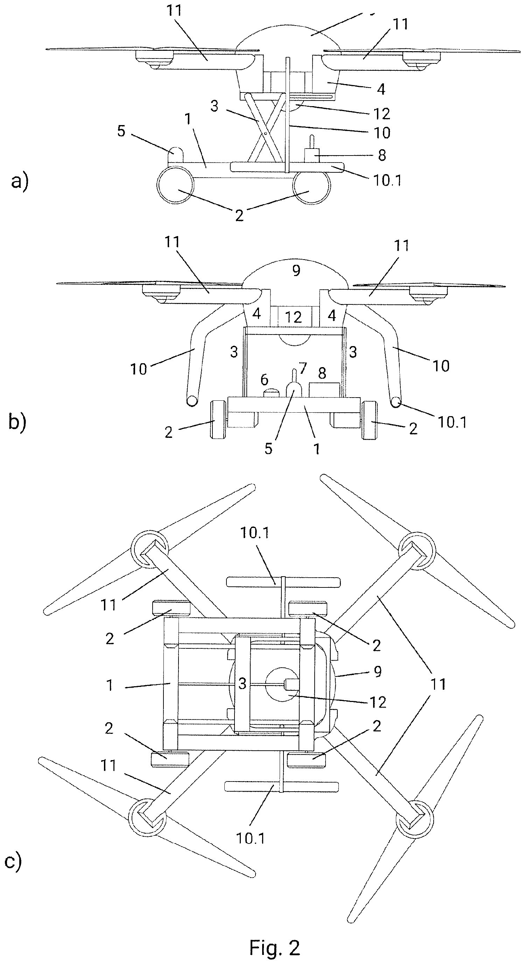

Figures 1 and 2 show various views of the aircraft being carried by (or mounted on) the ground vehicle once the landed aircraft has been lifted from the ground. As can be seen in Figures 1A and B, the four cantilevers 11 of the aircraft are resting in the respective recesses of the four supports 4 of the ground vehicle. In order to achieve this engagement the ground vehicle has to approach the landed aircraft with a predetermined orientation with respect to the aircraft's orientation. Since the radius of curvature of the recesses of the supports 4 is considerable larger than the radius of curvature of the four cantilevers 11 of the aircraft, the two orientations do not have to coincide perfectly. Rather, a mismatch of up to 3°, preferably up to 5° and more preferably up to 10° is tolerable.

Moreover, the ground vehicle has to approach the landed aircraft from one of two predetermined sides to avoid any interference with the two legs 10 of the aircraft.

Once the ground vehicle has approached the landed aircraft from one of the two sides and with one of the two orientations and has moved under the landed aircraft, the four supports 4 are moved upwards by means of the lifting appliance 3 in order to lift the landed aircraft from the ground (which is evident from a comparison of the scissor mechanism 3.1 shown in Figures 2A and 3A). Once being lifted up the horizontal bars 10.1 attached to the distal ends of legs 10 do no longer touch ground and preferably have a distance to ground corresponding to at least the radius of the wheels 2.

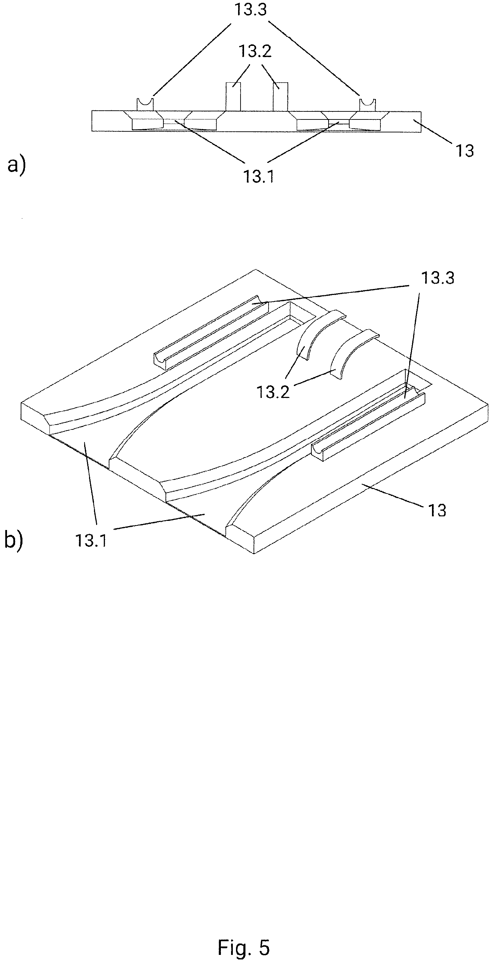

Figures 5A and B show a front view and an isometric view of a preferred embodiment of a base station for both the ground vehicle and the aircraft. The base station comprises a base 13 defining two guiding rails or slides 13.1 having a converging shape so as to securely guide the wheels 2 of the approaching ground vehicle into the base station. The width of the guide rails at their distal ends preferably corresponds to the width of the wheels 2 of the ground vehicle so as to ensure a precise positioning of the ground vehicle within the base station with respect to a width direction. A precise positioning of the ground vehicle with respect to the base station with respect to a length direction is preferably achieved by the guide rails 13.1 forming the ends and thus defining stops for the wheels of the ground vehicle. The width of the guide rails 13.1 at their proximal ends (i.e. at the entry of the base station) preferably amounts to at least 115%, more preferably at least 130% and most preferably at least 150% at the width of the guide rails 13.1 at their distal ends.

The base station further comprises two electrical contacts 13.2 adapted for contacting corresponding electrical contacts (not shown) provided at the ground vehicle. The electrical contacts 13.2 are connected to a current source (not shown) adapted for charging the battery of the ground vehicle. Preferably, the electrical contacts 13.2 are provided in the form of spring contacts. They are arranged on the base 13 so as to ensure electrical contact with the contacts of the ground vehicle as soon as the ground vehicle has reached its final position within the base station, which may, e.g., be defined by a position where two wheels 2 of the ground vehicle contact the stops defined by the dead ends of the guide rails 13.1. Of course, proper positioning of the ground vehicle may also be ensured by other means such as respective sensors or the like.

In the embodiment shown in Figure 5 the base station furthermore comprises two electrical contacts 13.3 adapted for charging the aircraft. In the shown embodiment, the two electrical contacts 13.3 are provided in the form of two groove-like structures, the shape of which corresponds to the horizontal bars 10.1 of the legs 10 of the aircraft. Once the ground vehicle has reached its rest position within the base station, the aircraft may be set down onto the base 13 by moving the lifting appliance 3 of the ground vehicle downwards. Since the aircraft had previously been mounted on the ground vehicle with a well-defined orientation, lowering the aircraft onto the base 13 of the base station results in the two horizontal bars 10.1 of the legs 10 of the aircraft to rest on or be supported by the two contacts 13.3. The two contacts 13.3 are electrically connected to a current source (not shown) adapted for charging the battery of the aircraft.

The base station shown in Figures 5A and 5B is particularly advantageous as it allows for charging both the ground vehicle and the aircraft at the same time (potentially using the same current source) which minimizes the space needed for the base station and improves its versatility. Of course, the battery of the ground vehicle could also be charged in the base station without any aircraft present. Vice versa, the ground vehicle may leave the base station after having set down the aircraft which remains at the base station for charging.

While the embodiment of the base station shown in Figures 5A and 5B is particularly preferred, other base stations are also envisaged by the present invention. For example, the base station could only have the electrical contacts 13.2 for charging the ground vehicle or have only the contacts 13.3 for charging the aircraft. In another embodiment, the aircraft could also be charged indirectly via the ground vehicle. For this purpose, the ground vehicle may comprise wiring and electrical contacts for contacting corresponding electrical contacts at the aircraft. Thus, electrical current could be provided from a current source via electrical contacts 13.2 to the ground vehicle and via wiring and additional electrical contacts (not shown) to electrical contacts (not shown) at the aircraft.

According to the inventive method for transporting a VTOL aircraft and/or its payload, the aircraft takes off from the base station or another start position and autonomously maneuvers to fulfill its mission. The aircraft may start from its rest or charging position in the base station (e.g., the base station shown in Figure 5). However, the base station may be provided with a roof or might be located indoors. In this case, it is preferable that the ground vehicle mounts the aircraft by again moving its lifting appliance upwards and transports the aircraft to a predetermined start position. The aircraft may then either start directly from the ground vehicle or might be set down onto ground and start from ground. Before start the ground vehicle may move away from under the aircraft to ensure that there is no interference between the ground vehicle and the aircraft during take-off.

During the mission of the aircraft the ground vehicle may return to the base station for charging. Preferably, both the location and the orientation of the base station is known to the ground vehicle with the coordinates, e.g., being saved in the processor. The ground vehicle preferably approaches the base station on a predetermined track in order to ensure that the wheels 2 of the ground vehicle properly pull into the guide rails 13.1 of the base station. For this purpose, different protocols may be used. For example, the ground vehicle may autonomously move towards a position on an axis defined by extending the guide rails 13.1 beyond the base 13, said position having, e.g., a distance of two meters from the base 13. At this position the ground vehicle may adjust its orientation so as to be oriented parallel to the axis defined by the extension of the guide rails 13.1. The ground vehicle then may move along this axis towards the proximal ends (at the entrance) of the guide rails 13.1 of the base station. In order to follow this track with sufficient precision, RTK or IPS might be used. Alternatively or in addition a sensor system may be provided for correcting the position and the orientation of the ground vehicle with respect to the base station. For example, the ground vehicle may have one or more cameras for taking images of the base station or of specific markers (such as QR codes) provided at the base station. The processor of the ground vehicle may then calculate its position and/or orientation and correct the track towards the base station on the basis of said analysis. The position accuracy required is defined by the width of the guide rails 13.1 at their proximal ends. Due to their converging shape (see Figure 5B) the vehicle is then properly guided towards its rest position. The vehicle may stop once it has reached a predetermined stop, which might be defined by the dead ends of the guide rails 13.1 as discussed above. Alternatively, the ground vehicle may stop moving once electrical contact with the electrical contacts 13.2 has been detected.

Once properly positioned in the base station, the ground vehicle is being charged and/or awaits its next mission.

After its mission, the VTOL aircraft touches down at a predetermined position or at an arbitrary position within a predetermined area, which may be a certain area which can be monitored by one or more cameras or other suitable sensors. Once the aircraft has landed, it may provide a signal either directly or indirectly (e.g., via the base station) to the ground vehicle and, inter alia, communicate its position and/or orientation to the ground vehicle. Alternatively, the ground vehicle or the base station may monitor the predetermined landing area using, e.g., a laser scanner and/or one or more cameras (preferably having a wide-angle lens). Analysis of the signal of the laser scanner and/or the images of the one or more cameras will yield information as to whether or not the aircraft has landed within the monitored area. Moreover, a laser scanner may also provide information as to the distance between the landed aircraft and the ground vehicle.

Once the ground vehicle has been informed and/or has detected a landing, it autonomously moves towards the landed aircraft. As discussed previously, the ground vehicle may use GPS, RTK and/or IPS for approaching the landed aircraft. Alternatively or in addition the ground vehicle may use one or more sensors such as one or more cameras for locating the landed aircraft. For this purpose, the aircraft may be provided with several markers such as ARTags which are preferably provided along the four main axes of the aircraft. As is known in the art, images taken by one or more cameras of the ground vehicle may be searched for such markers. Due to the specific properties of the marker, it is sufficient if a single marker is detected in order to define the position and the orientation of the landed aircraft.

As discussed above with respect to approaching the base station, the ground vehicle may now approach the landed aircraft on a predetermined track with a predetermined position and/or orientation. For example, the ground vehicle may first move towards a position which is located on an axis defined by an extension of the two horizontal bars 10.1 of the legs 10 of the aircraft and may then move along said axis on a linear track until the ground vehicle is located under the landed aircraft. While following this track the ground vehicle permanently corrects its position and/or its orientation on the basis of one or more positioning systems and/or information provided by the one or more detectors. Preferably one or more markers such as ARTags are provided at the bottom of, e.g., the aircraft body 9 which will allow for a very precise positioning of the ground vehicle once present under the aircraft.

As soon as the ground vehicle is properly positioned under the aircraft, the lifting appliance 3 is moved upwards as discussed previously and the aircraft is lifted from ground (see Figures 1 and 2).

The ground vehicle then moves towards the base station as described above and, thus, transports the mounted aircraft towards the base station for charging. During charging of the aircraft the ground vehicle may pursue another mission and, e.g., collect another aircraft.

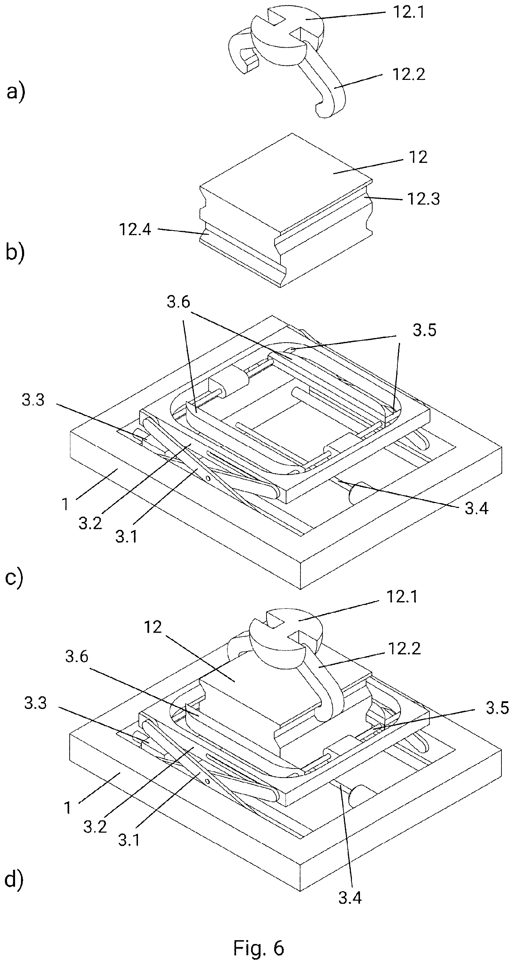

As mentioned previously, rather than transporting the entire aircraft the ground vehicle may also transport a payload carried by the aircraft. For example, the aircraft body 9 of the aircraft may comprise a mounting device 12.1 (see Figure 6A) having two motorized brackets 12.2 adapted for engaging, e.g., grooves 12.3 provided in the payload 12 (see Figure 6B). The payload 12 shown in Figure 6B may, for example, be a container having an opening (not shown) or which can be opened. The aircraft may be adapted to autonomously mount the payload 12 by moving the two motorized brackets 12.2 into the corresponding grooves 12.3 of the container 12.

Once the aircraft together with the mounted payload 12 has landed, the ground vehicle may move under the aircraft and under the mounted payload 12 as described above. In the embodiment shown in Figure 6C, the lifting appliance 3 comprises two payload brackets 3.6 adapted to engage with corresponding grooves 12.4 provided at the payload (see Figure 6B). The payload brackets 3.6 are driven by two synchronously moving spindles 3.5 with left and right handed threading on either side of the vehicle, respectively. The spindles are driven by a motor (not shown) so as to move the payload brackets 3.6 towards each other for engaging the payload 12 as shown in Figure 6D.

Once the ground vehicle has reached its proper position under the aircraft and under the mounted payload 12, the lifting appliance 3 of Figure 6C is moved upward as discussed previously until the payload brackets 3.6 are level with the grooves 12.4 of the mounted payload 12. For this purpose, markers and respective sensors may be provided as discussed above. Alternatively, the necessary upstroke might be known due to the dimensions of the payload and the aircraft. Once the payload brackets 3.6 and the corresponding grooves 12.4 of the payload 12 are on the same level, the payload brackets 3.6 are moved towards each other to engage the grooves 12.4 of the payload 12. Simultaneously, the two brackets 12.2 might be slightly opened to allow for some to lee way. Once the payload 12 is properly mounted between the payload brackets 3.6, the two brackets 12.2 are completely opened. The ground vehicle with the mounted payload may then move away from the aircraft.

In an analogous manner a payload may be moved by means of a ground vehicle toward an aircraft and then transferred from the ground vehicle to the aircraft.

Of course, Figure 6 just shows an exemplary embodiment of mechanisms for mounting a payload to both the aircraft and the ground vehicle. Yet, the present invention is not limited to this specific embodiment and other mechanisms may be utilized. For example, the payload 12 might be attached to aircraft by means of a magnetic mechanism and may simply sit or rest within a recess provided in the ground vehicle.

## Claims

1. System comprising a vertical take-off and landing aircraft, the aircraft being adapted to transport a payload (12), and a ground vehicle for transporting the aircraft and/or its payload (12), wherein the ground vehicle and the aircraft are adapted to communicate, directly or indirectly, with each other, wherein the ground vehicle is adapted for autonomously maneuvering over ground, wherein the ground vehicle comprises a support (4) for supporting the aircraft and/or its payload (12), **characterized in that**:
the ground vehicle is further adapted to locate the landed aircraft with respect to an own position, to autonomously move towards the landed aircraft, to pick the landed aircraft and/or its payload (12) up and to transport the picked-up aircraft and/or its payload (12) to a predetermined position,
and **in that** the support (4) is movable in at least a vertical direction in order to lift the landed aircraft from the ground or the payload (12) from the landed aircraft.

2. System according to claim 1, wherein the ground vehicle comprises a positioning system (6) to determine its own position and wherein the ground vehicle is adapted to communicate with an external unit and to locate the landed aircraft with respect to its own position on the basis of aircraft's coordinates received by communication with the external unit

3. System according to claim 1 or 2, wherein the ground vehicle comprises an orientation system to determine an own orientation and wherein the ground vehicle is adapted to communicate with an external unit and to identify a landed aircraft's orientation with respect to its own orientation on the basis of an aircraft's orientation received by communication with the external unit.

4. System according to any of the preceding claims, wherein the ground vehicle comprises a detection system to determine a landed aircraft's position and/or orientation, wherein the detection system comprises one or a combination of the following components: one or more cameras, a laser, a LIDAR, one or more LEDs, one or more light sensors, one or more segmented light sensors, one or more magnetic sensors.

5. System according to any of the preceding claims, wherein the ground vehicle is adapted to approach the landed aircraft from one of one or more predetermined sides and/or with one of one or more predetermined orientations with respect to an aircraft's orientation.

6. System according to claim 5, wherein the ground vehicle is adapted to pick the landed aircraft and/or its payload up so as to achieve one of one or more predetermined orientations of the picked-up aircraft and/or payload with respect to the ground vehicle.

7. System according to any of the preceding claims, wherein the ground vehicle comprises a lift device (3) adapted to engage with the aircraft and to lift the aircraft and/or its payload from ground and wherein the aircraft and/or the payload comprises one or more mating sections for engaging with the support.

8. System according to any of the preceding claims, further comprising a base station, wherein the base station is adapted to communicate with the ground vehicle and the aircraft.

9. System according to any of the preceding claims, further comprising a charging station, wherein the charging station is adapted to receive the ground vehicle and the aircraft and to charge both the ground vehicle and the aircraft.

10. System according to any of the preceding claims, further comprising a charging station, wherein the ground vehicle and/or the aircraft comprises a battery and charging equipment and wherein the charging station is adapted to cooperate with the charging equipment for charging the battery.

11. Method for transporting a vertical take-off and landing aircraft and/or its payload, wherein a ground vehicle is adapted for autonomously maneuvering over ground, **characterized in that** the method comprises:
letting a vertical take-off and landing aircraft maneuver and land;
locating the landed aircraft;
moving a ground vehicle for transporting the aircraft and/or its payload towards the landed aircraft, the ground vehicle is further adapted to locate the landed aircraft with respect to an own position, to autonomously move towards the landed aircraft;
picking up the landed aircraft and/or its payload; and
transporting the picked-up aircraft and/or the payload to a predetermined position.

12. Method according to claim 11, wherein the landed aircraft is located by a positioning system of the aircraft, by the ground vehicle and/or by an external positioning system.

13. Method according to claim 11, wherein the step of locating the landed aircraft yields the position and/or orientation of the landed aircraft with an accuracy of less than 50 cm and/or 10°

14. Method according to claim 13, wherein the step of moving the ground vehicle towards the landed aircraft comprises moving the ground vehicle to a certain area around the located aircraft, and wherein the ground vehicle subsequently locates the position and/or orientation of the landed aircraft with an accuracy of less than 2 cm and/or 2°.

## Patentansprüche

1. System, das aufweist: ein senkrecht startendes und landendes Flugzeug, wobei das Flugzeug eingerichtet ist, eine Nutzlast (12) zu transportieren, und ein Bodenfahrzeug zum Transportieren des Flugzeugs und/oder seiner Nutzlast (12), wobei das Bodenfahrzeug und das Flugzeug eingerichtet sind, direkt oder indirekt miteinander zu kommunizieren, wobei das Bodenfahrzeug zum autonomen Manövrieren über den Boden eingerichtet ist, wobei das Bodenfahrzeug eine Halterung (4) zum Halten des Flugzeugs und/oder seiner Nutzlast (12) aufweist, **dadurch gekennzeichnet, dass**:
das Bodenfahrzeug ferner eingerichtet ist, das gelandete Flugzeug in Bezug auf eine eigene Position zu lokalisieren, sich autonom auf das gelandete Flugzeug zuzubewegen, das gelandete Flugzeug und/oder seine Nutzlast (12) aufzunehmen und das aufgenommene Flugzeug und/oder seine Nutzlast (12) zu einer vorbestimmten Position zu transportieren, und dadurch, dass
die Halterung (4) mindestens in vertikaler Richtung beweglich ist, um das gelandete Flugzeug vom Boden oder die Nutzlast (12) vom gelandeten Flugzeug abzuheben.

2. System nach Anspruch 1, wobei das Bodenfahrzeug ein Ortungssystem (6) aufweist, um seine eigene Position zu bestimmen, und wobei das Bodenfahrzeug eingerichtet ist, mit einer externen Einheit zu kommunizieren und das gelandete Flugzeug in Bezug auf seine eigene Position auf der Grundlage von Flugzeugkoordinaten zu lokalisieren, die durch Kommunikation mit der externen Einheit empfangen werden.

3. System nach Anspruch 1 oder 2, wobei das Bodenfahrzeug ein Ausrichtungssystem aufweist, um eine eigene Ausrichtung zu bestimmen, und wobei das Bodenfahrzeug eingerichtet ist, mit einer externen Einheit zu kommunizieren und die Ausrichtung eines gelandeten Flugzeugs in Bezug auf seine eigene Ausrichtung auf der Grundlage einer Flugzeugausrichtung zu identifizieren, die durch Kommunikation mit der externen Einheit empfangen wird.

4. System nach einem der vorhergehenden Ansprüche, wobei das Bodenfahrzeug ein Detektionssystem aufweist, um die Position und/oder Ausrichtung eines gelandeten Flugzeugs zu bestimmen, wobei das Detektionssystem eine oder eine Kombination der folgenden Komponenten aufweist: eine oder mehrere Kameras, einen Laser, ein LIDAR, eine oder mehrere LEDs, einen oder mehrere Lichtsensoren, einen oder mehrere segmentierte Lichtsensoren, einen oder mehrere magnetische Sensoren.

5. System nach einem der vorhergehenden Ansprüche, wobei das Bodenfahrzeug eingerichtet ist, sich dem gelandeten Flugzeug von einer oder mehreren vorgegebenen Seiten und/oder mit einer oder mehreren vorgegebenen Ausrichtungen in Bezug auf die Ausrichtung des Flugzeugs zu nähern.

6. System nach Anspruch 5, wobei das Bodenfahrzeug eingerichtet ist, das gelandete Flugzeug und/oder seine Nutzlast aufzunehmen, um eine von einer oder mehreren vorgegebenen Ausrichtungen des aufgenommenen Flugzeugs und/oder der aufgenommenen Nutzlast in Bezug auf das Bodenfahrzeug zu erreichen.

7. System nach einem der vorhergehenden Ansprüche, wobei das Bodenfahrzeug eine Hebevorrichtung (3) aufweist, die eingerichtet ist, mit dem Flugzeug in Eingriff zu treten und das Flugzeug und/oder seine Nutzlast vom Boden anzuheben, und wobei das Flugzeug und/oder die Nutzlast einen oder mehrere Passabschnitte zum Eingriff mit der Halterung aufweist.

8. System nach einem der vorhergehenden Ansprüche, das ferner eine Basisstation aufweist, wobei die Basisstation eingerichtet ist, mit dem Bodenfahrzeug und dem Flugzeug zu kommunizieren.

9. System nach einem der vorhergehenden Ansprüche, das ferner eine Ladestation aufweist, wobei die Ladestation eingerichtet ist, das Bodenfahrzeug und das Flugzeug aufzunehmen und sowohl das Bodenfahrzeug als auch das Flugzeug aufzuladen.

10. System nach einem der vorhergehenden Ansprüche, das ferner eine Ladestation aufweist, wobei das Bodenfahrzeug und/oder das Flugzeug eine Batterie und eine Ladeeinrichtung aufweist und wobei die Ladestation eingerichtet ist, mit der Ladeeinrichtung zum Laden der Batterie zusammenzuwirken.

11. Verfahren zum Transportieren eines senkrecht startenden und landenden Flugzeugs und/oder seiner Nutzlast, wobei ein Bodenfahrzeug zum autonomen Manövrieren über dem Boden eingerichtet ist, **dadurch gekennzeichnet, dass** das Verfahren aufweist:
Manövrieren- und Landenlassen eines vertikal startenden und landenden Flugzeugs;
Lokalisieren des gelandeten Flugzeugs;
Bewegen eines Bodenfahrzeugs zum Transportieren des Flugzeugs und/oder seiner Nutzlast zum gelandeten Flugzeug, wobei das Bodenfahrzeug ferner eingerichtet ist, das gelandete Flugzeug in Bezug auf eine eigene Position zu lokalisieren, um sich autonom zum gelandeten Flugzeug zu bewegen;
Aufnehmen des gelandeten Flugzeugs und/oder seiner Nutzlast; und
Transportieren des aufgenommenen Flugzeugs und/oder der Nutzlast zu einer vorbestimmten Position.

12. Verfahren nach Anspruch 11, wobei das gelandete Flugzeug durch ein Ortungssystem des Flugzeugs, durch das Bodenfahrzeug und/oder durch ein externes Ortungssystem lokalisiert wird.

13. Verfahren nach Anspruch 11, wobei der Schritt des Lokalisierens des gelandeten Flugzeugs die Position und/oder Ausrichtung des gelandeten Flugzeugs mit einer Genauigkeit von weniger als 50 cm und/oder 10° ergibt.

14. Verfahren nach Anspruch 13, wobei der Schritt des Bewegens des Bodenfahrzeugs zum gelandeten Flugzeug das Bewegen des Bodenfahrzeugs in einen bestimmten Bereich um das lokalisierte Flugzeug aufweist, und wobei das Bodenfahrzeug anschließend die Position und/oder Ausrichtung des gelandeten Flugzeugs mit einer Genauigkeit von weniger als 2 cm und/oder 2° lokalisiert.

## Revendications

1. Système comprenant un aéronef à décollage et atterrissage vertical, ledit aéronef étant apte à transporter une charge utile (12), et un véhicule terrestre pour le transport de l'aéronef et/ou de sa charge utile (12), où le véhicule terrestre et l'aéronef sont aptes à communiquer entre eux, directement ou indirectement, où le véhicule terrestre est apte à manoeuvrer de manière autonome au sol, où le véhicule terrestre comprend un support (4) permettant de supporter l'aéronef et/ou sa charge utile (12), **caractérisé en ce que** :
le véhicule terrestre est en outre apte à localiser l'aéronef atterri par rapport à une position propre, à se déplacer de manière autonome vers l'aéronef atterri, à embarquer l'aéronef atterri et/ou sa charge utile (12) et à transporter l'aéronef embarqué et/ou sa charge utile (12) vers un emplacement prédéfini, et **en ce que**
le support (4) est déplaçable au moins dans la direction verticale pour soulever l'aéronef atterri du sol ou la charge utile (12) de l'aéronef atterri.

2. Système selon la revendication 1, où le véhicule terrestre comprend un système de positionnement (6) permettant de déterminer sa position propre et où le véhicule terrestre est apte à communiquer avec une unité extérieure et à localiser l'aéronef atterri par rapport à sa position propre sur la base des coordonnées d'aéronef reçues par communication avec l'unité extérieure.

3. Système selon la revendication 1 ou la revendication 2, où le véhicule terrestre comprend un système d'orientation permettant de déterminer une orientation propre et où le véhicule terrestre est apte à communiquer avec une unité extérieure et à identifier une orientation d'aéronef atterri par rapport à son orientation propre sur la base d'une orientation d'aéronef reçue par communication avec l'unité extérieure.

4. Système selon l'une des revendications précédentes, où le véhicule terrestre comprend un système de détection permettant de déterminer un emplacement et/ou une orientation d'aéronef atterri, où le système de détection comprend un composant, ou une combinaison des composants suivants : une ou plusieurs caméras, un laser, un lidar, une ou plusieurs LED, un ou plusieurs capteurs de lumière, un ou plusieurs capteurs de lumière segmentés, un ou plusieurs capteurs magnétiques.

5. Système selon l'une des revendications précédentes, où le véhicule terrestre est apte à approcher l'aéronef atterri par un côté d'un ou de plusieurs côtés prédéfinis et/ou avec une orientation d'une ou de plusieurs orientations prédéfinies par rapport à une orientation d'aéronef.

6. Système selon la revendication 5, où le véhicule terrestre est apte à embarquer l'aéronef atterri et/ou sa charge utile de manière à atteindre une orientation d'une ou de plusieurs orientations prédéfinies de l'aéronef et/ou de la charge utile embarqués par rapport au véhicule terrestre.

7. Système selon l'une des revendications précédentes, où le véhicule terrestre comprend un dispositif élévateur (3) apte à venir en prise sur l'aéronef et à soulever l'aéronef et/ou sa charge utile du sol, et où l'aéronef et/ou la charge utile comprennent une ou plusieurs sections d'accouplement pour la mise en prise avec le support.

8. Système selon l'une des revendications précédentes, comprenant en outre une station de base, ladite station de base étant apte à communiquer avec le véhicule terrestre et l'aéronef.

9. Système selon l'une des revendications précédentes, comprenant en outre une station de charge, ladite station de charge étant apte à recevoir le véhicule terrestre et l'aéronef et à charger le véhicule terrestre ainsi que l'aéronef.

10. Système selon l'une des revendications précédentes, comprenant en outre une station de charge, le véhicule terrestre et/ou l'aéronef comprenant une batterie et un équipement de charge, et la station de charge étant apte à coopérer avec l'équipement de charge pour charger la batterie.

11. Procédé de transport d'un aéronef à décollage et atterrissage vertical et/ou de sa charge utile, où un véhicule terrestre est apte à manoeuvrer de manière autonome au sol, **caractérisé en ce que** ledit procédé comprend :
la manoeuvre et l'atterrissage d'un aéronef à décollage et atterrissage vertical ;
la localisation de l'aéronef atterri ;
le déplacement d'un véhicule terrestre pour le transport de l'aéronef et/ou de sa charge utile vers l'aéronef atterri, ledit véhicule terrestre étant en outre apte à localiser l'aéronef atterri par rapport à une position propre, à se déplacer de manière autonome vers l'aéronef atterri ;
l'embarquement de l'aéronef atterri et/ou de sa charge utile ; et
le transport de l'aéronef embarqué et/ou de la charge utile vers un emplacement prédéfini.

12. Procédé selon la revendication 11, où l'aéronef atterri est localisé par un système de positionnement de l'aéronef, par le véhicule terrestre et/ou par un système de positionnement extérieur.

13. Procédé selon la revendication 11, où l'étape de localisation de l'aéronef atterri acquiert l'emplacement et/ou l'orientation de l'aéronef atterri avec une précision de moins de 50 cm et/ou de 10°.

14. Procédé selon la revendication 13, où l'étape de déplacement du véhicule terrestre vers l'aéronef atterri comprend le déplacement du véhicule terrestre vers une certaine zone autour de l'aéronef localisé, et où le véhicule terrestre localise en conséquence l'emplacement et/ou orientation de l'aéronef atterri avec une précision de moins de 2 cm et/ou de 2°.
